# EUROPEAN PATENT APPLICATION

(11) **EP 4 312 340 A1**
(43) Date of publication of application: **31.01.2024**
(21) Application number: 23172267.9
(22) Date of filing: 09.05.2023
(51) Int. Cl.: H02J 7/00, B60L 53/60

(54) **BATTERY ENERGY STATIONS AND CHARGING MANAGEMENT METHODS THEREOF**

(30) Priority: 25.07.2022 TW 111127793
(71) Applicant: Ionex Energy Inc., Taipei City 115 (TW)
(72) Inventor: HOU, YI-AN, 115 Taipei City (TW); HSU, CHI-HUI, 115 Taipei City (TW)
(74) Representative: Karakatsanis, Georgios

(57) **Abstract**

Battery energy stations and charging management methods thereof are provided, which are suitable for an electronic equipment used for storing and charging a plurality of batteries. First, the batteries are charged with a first charging efficiency in a first period, wherein the first charging efficiency in the first period is fixed. Then, it is determined whether a predetermined condition is met within the first period. When the predetermined condition is met within the first period, the first charging efficiency is adjusted, and the batteries are charged with the adjusted first charging efficiency.

## Description

### BACKGROUND OF THE INVENTION

### Field of the Invention

The disclosure relates generally to battery energy stations and charging management methods thereof, and, more particularly to battery energy stations and charging management methods thereof that can be charged at different charging efficiencies at different periods and has the flexibility to adjust the charging efficiency.

### Description of the Related Art

Recently, with the rising awareness of environmental protection and electric vehicle technology advances, the development of electric vehicles powered by electrical energy to replace traditional vehicles powered by fossil fuels has gradually become an important goal in the automotive field, thus making electric vehicles become more and more popular. In order to increase the range and willingness to use electric vehicles, many countries or cities have begun to set up charging stations and battery energy stations in public places to provide electric vehicles and/or electric vehicles for charging or battery exchange, making the use of electric vehicles more convenient.

With the popularization of electric vehicles, the demand for electricity also increases accordingly. Since the upgrade of existing power plants and power grids requires huge costs and time, if it is necessary to meet the power consumption of various fields, such as industrial power consumption, household power consumption, and public power consumption at the same time, it will cause a serious burden on the existing power grid, and further increase the crisis of power outage and blackout. In response to the crisis of the power grid, power plants and power consumers, such as manufacturers of charging stations/battery energy stations, can cooperate in energy regulation agreements, such as demand response to manage power consumption in the power grid.

Additionally, for different electric vehicles, the charging or battery requirements during peak hours and off-peak hours may be different. For example, the battery demand of electric vehicles during peak hours will be higher than that during off-peak hours. During peak hours, the battery energy station needs to charge the battery at a high speed, with the goal of making the battery fully charged as soon as possible. However, during off-peak hours, since the demand for the battery is not high, the battery energy station can charge the battery at a slow rate on the premise of saving costs, just to meet the specific battery demand. How to maintain the normal operation of the power grid and at the same time meet the electricity demand of users is an urgent problem that the industry needs to solve.

### BRIEF SUMMARY OF THE INVENTION

An embodiment of a battery energy station comprises a battery storage system including a plurality of batteries, an energy module, and a processing unit. The processing unit couples to the battery storage system and the energy module, and uses the energy module to charge the batteries with a first charging efficiency in a first period, wherein the first charging efficiency in the first period is fixed. Then, it is determined whether a predetermined condition is met within the first period. When the predetermined condition is met within the first period, the processing unit adjusts the first charging efficiency, and uses the energy module to charge the batteries with the adjusted first charging efficiency.

In an embodiment of a charging management method, which are suitable for use in an electronic equipment used for storing and charging a plurality of batteries. First, the batteries are charged with a first charging efficiency in a first period, wherein the first charging efficiency in the first period is fixed. Then, it is determined whether a predetermined condition is met within the first period. When the predetermined condition is met within the first period, the first charging efficiency is adjusted, and the batteries are charged with the adjusted first charging efficiency.

In some embodiments, the method for determining whether the predetermined condition is met within the first period is to obtain a quantity of at least one battery demand received in a unit time to calculate a battery demand rate, and determine whether the battery demand rate is greater than a predetermined demand rate. When the battery demand rate is greater than the predetermined demand rate, it is determined that the predetermined condition is met within the first period.

In some embodiments, the method for determining whether the predetermined condition is met within the first period is to obtain the power level of each battery in the electronic equipment, for individual batteries, determine whether the battery is in a fully charged state according to its power level, determine whether a number of the fully charged batteries in the electronic equipment, or a full charge ratio of the number of fully charged batteries in the electronic equipment to the total number of batteries that can be contained in the electronic equipment is lower than a predetermined value. When the number of the fully charged batteries in the electronic equipment, or the full charge ratio of the number of fully charged batteries in the electronic equipment to the total number of batteries that can be contained in the electronic equipment is lower than the predetermined value, it is determined that the predefined condition is met within the first period.

In some embodiments, it is re-determined whether the predetermined condition is met within the first period. When the predetermined condition is not met, the batteries are re-charged at the first charging efficiency.

In some embodiments, the batteries are charged at a second charging efficiency during a second period, wherein the first charging efficiency is different from the second charging efficiency. When the predetermined condition is met within the first period, the adjusted first charging efficiency is equal to the second charging efficiency.

In some embodiments, the first period is an off-peak period, the second period is a peak period, and the second charging efficiency is higher than the first charging efficiency.

In some embodiments, the electronic equipment connects to a cloud server through a network, and receives information corresponding to the first period and the second period from the cloud server.

Charging management methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of a battery energy station of the invention;
Fig. 2 is a schematic diagram illustrating another embodiment of a battery energy station of the invention;
Fig. 3 is a flowchart of an embodiment of a charging management method for a battery energy station of the invention;
Fig. 4 is a flowchart of another embodiment of a charging management method for a battery energy station of the invention;
Fig. 5 is a flowchart of another embodiment of a charging management method for a battery energy station of the invention;
Fig. 6 is a flowchart of an embodiment of a method for determining whether a predetermined condition is met of the invention; and
Fig. 7 is a flowchart of another embodiment of a method for determining whether a predetermined condition is met of the invention.

### DETAILED DESCRIPTION OF THE INVENTION

The following description is of the best-contemplated mode of carrying out the invention. This description is made for the purpose of illustrating the general principles of the invention and should not be taken in a limiting sense. It should be understood that the embodiments may be realized in software, hardware, firmware, or any combination thereof.

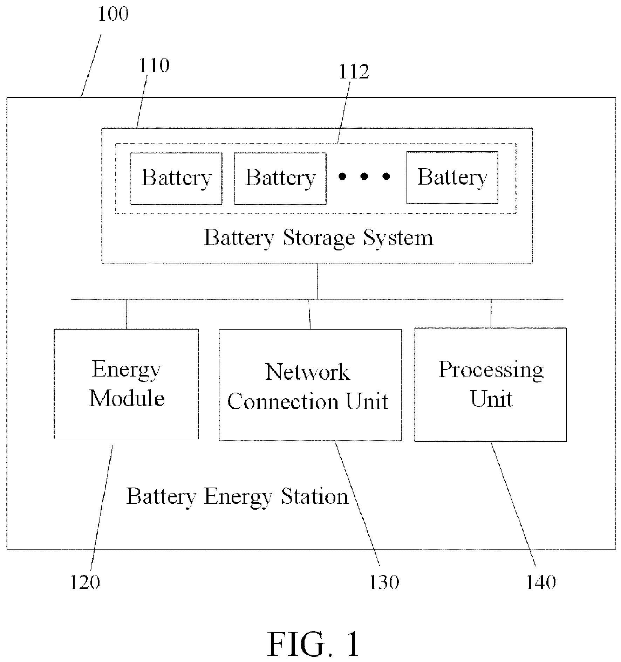

Fig. 1 is a schematic diagram illustrating an embodiment of a battery energy station of the invention. The battery energy station 100 of the present invention can be applied to an electronic equipment. As shown in the Fig. 1, the battery energy station 100 at least comprises a battery storage system 110, an energy module 120, a network connection unit 130, and a processing unit 140. The battery storage system 110 has a specific mechanism (not shown in the figure) that can store a plurality of batteries 112 and selectively lock or release the batteries. The battery energy station 100 can provide at least one battery for at least one electric device, such as an electric motorcycle or an electric vehicle to use. The energy module 120 can be electrically coupled to a power grid (not shown in the figure), so as to obtain a total current to supply power for the battery energy station, and to charge the batteries 112 in response to the signal of the processing unit 140. It must be noted that the battery storage system 110 may comprise a charging module corresponding to each battery, and the charging module has an upper current limit and/or a lower current limit to charge the corresponding battery. It should be noted that, in some embodiments, the energy module 120 can actively detect the total current supplied by the grid to the battery energy station 100, and notify the processing unit 140 of the information of the total current. The network connection unit 130 can be connected to a network, so that the battery energy station 100 has a network connection capability. In some embodiments, the network may be a wired network, a telecommunication network, and a wireless network such as a Wi-Fi network. The processing unit 140 can control the operation of all hardware and software in the battery energy station 100, and execute the charging management method of the battery energy station of the invention, the details will be described later.

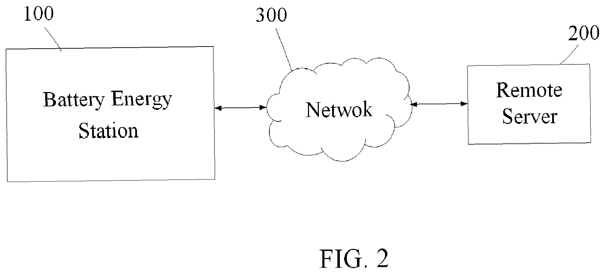

Fig. 2 is a schematic diagram illustrating another embodiment of a battery energy station of the invention. Similarly, the battery energy station 100 of the invention can be applied to an electronic equipment, which has a plurality of batteries that can be provided to at least one electric device, such as an electric motorcycle or an electric vehicle. The battery energy station 100 may have components similar to those shown in FIG. 1, which will be omitted here. The battery energy station 100 can use the network connection unit 130 to connect to a remote server 200 through a network 300 such as a wired network, a telecommunication network, and a wireless network such as a Wi-Fi network. It is reminded that, in some embodiments, the remote server 200 can simultaneously manage other battery power stations located at the same location or at different locations. As mentioned above, the energy module 120 of the battery energy station 100 can actively detect the total current supplied by the grid to the battery energy station 100, and notify the processing unit 140 of the information of the total current. In some embodiments, the remote server 200 can also notify the battery energy station 100 of the information of the total current through the network 300. In some embodiments, the cloud server, such as the remote server 200, can also transmit relevant information of different time periods, such as peak hours and off-peak hours, to the battery energy station 100 through the network 300. The battery energy station 100 can perform charging management operations based on the received information.

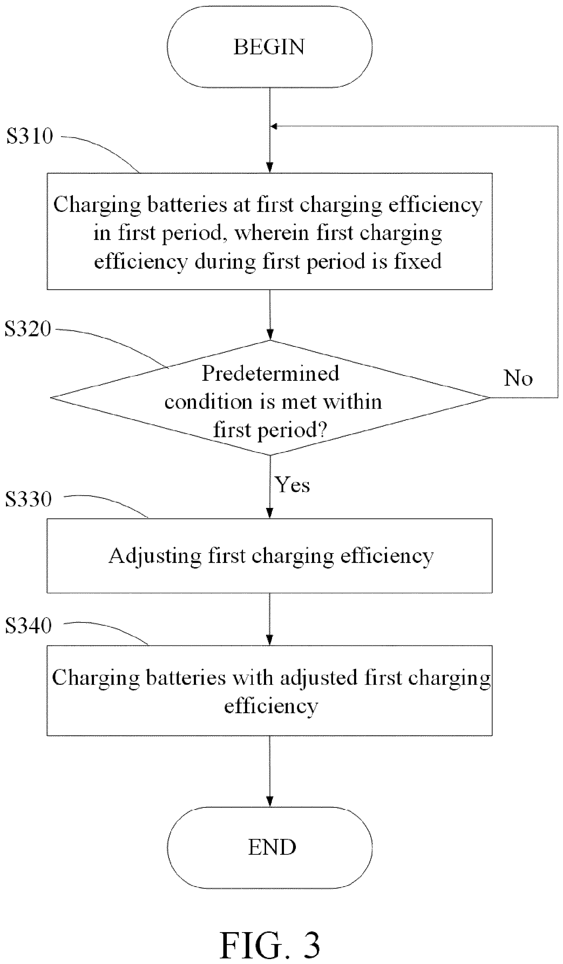

Fig. 3 is a flowchart of an embodiment of a charging management method for a battery energy station of the invention. The charging management method of the battery energy station according to the embodiment of the present invention is applicable to an electronic equipment for storing and charging multiple batteries, such as the battery energy station in FIG. 1.

First, in step S310, the batteries are charged at a first charging efficiency during a first period, wherein the first charging efficiency within the first period is fixed. For example, the maximum current required or acceptable for each battery/charging module is 17A, and the minimum current required or acceptable for each battery/charging module is 6A. In some embodiments, the first period may be an off-peak period, and the first charging efficiency may be the aforementioned minimum current. It should be noted that, in some embodiments, the cloud server can transmit the information corresponding to the first period to the battery energy station through the network. Then, in step S320, it is determined whether a predetermined condition is met within the first period. It is reminded that the predetermined condition can be designed according to different requirements and applications, examples of the predetermined condition will be described later, and the present invention is not limited to any conditions. When the predetermined condition is not met within the first period (No in step S320), the process returns to step S310. When the predetermined condition is met within the first period (Yes in step S320), in step S330, the first charging efficiency is adjusted, and in step S340, the batterie are charged according to the adjusted first charging efficiency. It should be noted that, in some embodiments, the adjusted first charging efficiency will be higher than the original first charging efficiency.

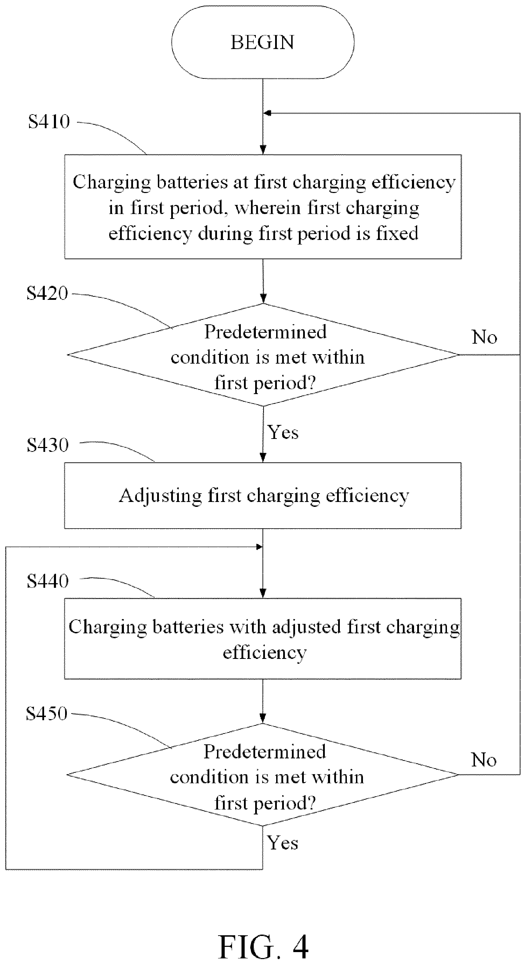

Fig. 4 is a flowchart of another embodiment of a charging management method for a battery energy station of the invention. The charging management method of the battery energy station according to the embodiment of the present invention is applicable to an electronic equipment for storing and charging multiple batteries, such as the battery energy station in FIG. 1.

First, in step S410, the batteries are charged at a first charging efficiency during a first period, wherein the first charging efficiency within the first period is fixed. In some embodiments, the first period may be an off-peak period, and the first charging efficiency may be the aforementioned minimum current. Similarly, in some embodiments, the cloud server can transmit the information corresponding to the first period to the battery energy station through the network. Then, in step S420, it is determined whether a predetermined condition is met within the first period. It is reminded that the predetermined condition can be designed according to different requirements and applications, examples of the predetermined condition will be described later, and the present invention is not limited to any conditions. When the predetermined condition is not met within the first period (No in step S420), the process returns to step S410. When the predetermined condition is met within the first period (Yes in step S420), in step S430, the first charging efficiency is adjusted, and in step S440, the batteries are charged according to the adjusted first charging efficiency. Similarly, in some embodiments, the adjusted first charging efficiency is higher than the original first charging efficiency. Then, in step S450, it is re-determined whether the predetermined condition is met within the first period. When the predetermined condition is met (Yes in step S450), the flow returns to step S440. When the predetermined condition is not met (No in step S450), the flow returns to step S410, and the batteries are re-charged with the first charging efficiency.

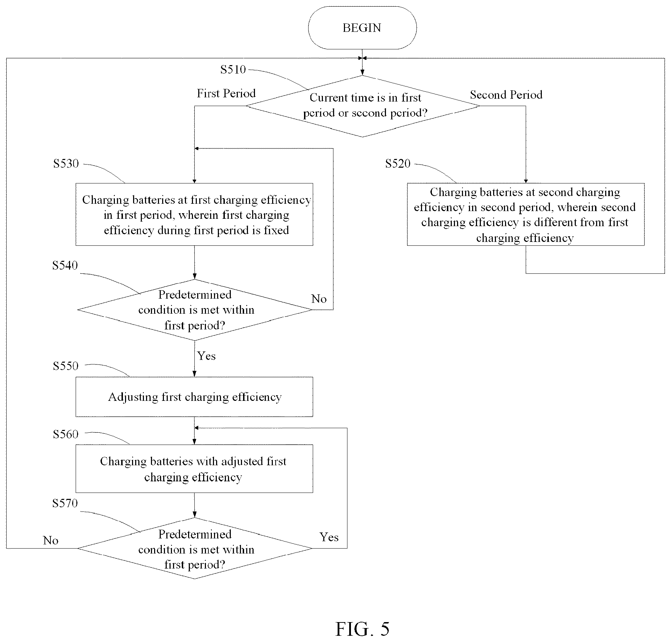

Fig. 5 is a flowchart of another embodiment of a charging management method for a battery energy station of the invention. The charging management method of the battery energy station according to the embodiment of the present invention is applicable to an electronic equipment for storing and charging multiple batteries, such as the battery energy station in FIG. 1.

First, in step S510, the current time is obtained, and it is determined whether the current time is in a first period or a second period. It should be noted that, in some embodiments, the first period may be an off-peak time period, and the second period may be an on-peak time period. The electronic equipment can be connected to a cloud server through a network, and receives information corresponding to the first period and the second period from the cloud server. When the current time is in the second period, in step S520, the batteries are charged with a second charging efficiency in the second period. It should be noted that, in some embodiments, the second charging efficiency may be the highest current required or acceptable by each battery/charging module. When the current time is in the first time period, in step S530, the batteries are charged with a first charging efficiency in the first period, wherein the first charging efficiency in the first period is fixed. It should be noted that, in some embodiments, the first period may be an off-peak time period, and the second time period may be a peak time period. The first charging efficiency is different from the second charging efficiency, and the second charging efficiency is higher than the first charging efficiency. In some embodiments, the first charging efficiency may be the minimum current required or acceptable by each battery/charging module. Then, in step S540, it is determined whether a predetermined condition is met within the first period. It is reminded that the predetermined condition can be designed according to different requirements and applications, examples of the predetermined conditions will be described later, and the present invention is not limited to any conditions. When the predetermined condition is not met within the first period (No in step S540), the process returns to step S530. When the predetermined condition is met within the first time period (Yes in step S540), in step S550, the first charging efficiency is adjusted, and in step S560, the batteries are charged according to the adjusted first charging efficiency. Similarly, in some embodiments, the adjusted first charging efficiency is higher than the original first charging efficiency. In some embodiments, the adjusted first charging efficiency may be equal to the second charging efficiency. After that, in step S570, it is re-determined whether the predetermined condition is met within the first period. When the predetermined condition is met (Yes in step S570), the flow returns to step S560. When the predetermined condition is not met (No in step S570), the process returns to step S510, the time period of the current time is re-determined and subsequent operations are performed.

As mentioned above, the predetermined condition can be designed according to different needs and applications. Two examples of predetermined condition are discussed.

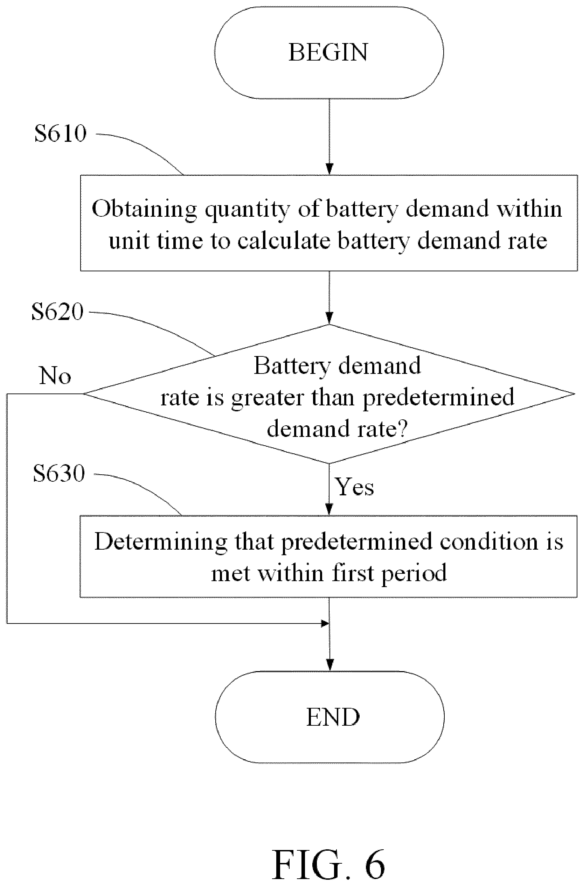

Fig. 6 is a flowchart of an embodiment of a method for determining whether a predetermined condition is met of the invention. In this embodiment, it can be determined whether a predetermined condition is met according to the battery requirement. First, in step S610, a quantity of at least one battery demand received within a unit time is obtained to calculate a battery demand rate. In some embodiments, the unit of time may be 1 hour. Then, in step S620, it is determined whether the battery demand rate is greater than a predetermined demand rate. When the battery demand rate is not greater than the predetermined demand rate (No in step S620), the process ends. When the battery demand rate is greater than the predetermined demand rate (Yes in step S620), in step S630, it is determined that the predetermined condition is met within the first period.

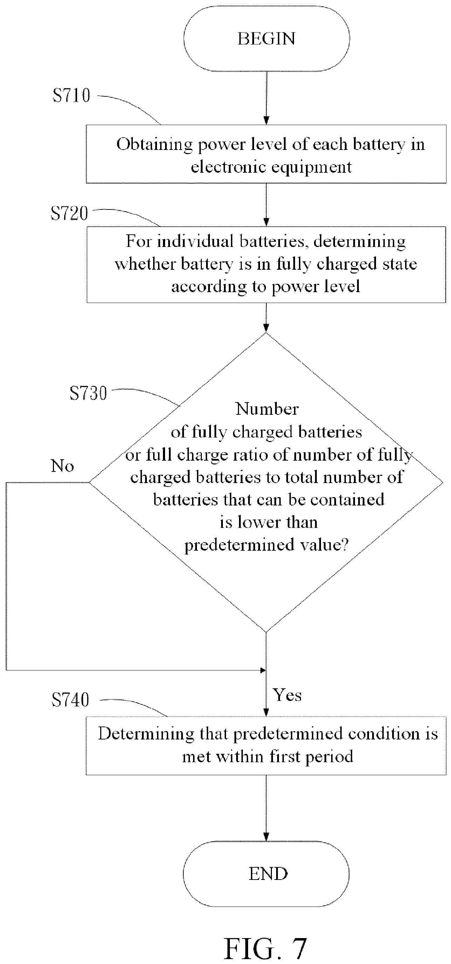

Fig. 7 is a flowchart of another embodiment of a method for determining whether a predetermined condition is met of the invention. In this embodiment, it can be determined whether a predetermined condition is met according to the battery requirement. Firstly, in step S710, a power level of each battery in the electronic equipment is obtained. In step S720, for an individual battery, it is determined whether the battery is in a fully charged state according to its corresponding power level. Then, in step S730, it is determined whether a number of the fully charged batteries in the electronic equipment, or a full charge ratio of the number of fully charged batteries in the electronic equipment to the total number of batteries that can be contained in the electronic equipment is lower than a predetermined value. When the number of the fully charged batteries in the electronic equipment, or the full charge ratio of the number of fully charged batteries in the electronic equipment to the total number of batteries that can be contained in the electronic equipment is not lower than the predetermined value (No in step S730), the process ends. When the number of the fully charged batteries in the electronic equipment, or the full charge ratio of the number of fully charged batteries in the electronic equipment to the total number of batteries that can be contained in the electronic equipment is lower than the predetermined value (Yes in step S730), in step S740, it is determined that the predetermined condition is met within the first period. For example, in some embodiments, when the fully charged ratio is lower than 50%, it can be determined that the predetermined condition is met within the first period, and the first charging efficiency can be adjusted in the first period.

It must be noted that the aforementioned examples of predetermined conditions for determination are only examples of this case, and the present invention is not limited thereto. The predetermined conditions can be designed according to different needs and applications. Therefore, through the battery energy station and its charging management method in this case, charging can be performed at different charging efficiencies at different times, and the charging efficiency can be adjusted flexibly, so as to meet various applications under the power demand at different periods.

Charging management methods, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A charging management method of battery energy station, which are suitable for use in an electronic equipment used for storing and charging a plurality of batteries, comprising:
charging the batteries at a first charging efficiency in a first period, wherein the first charging efficiency during the first period is fixed;
charging the batteries at a second charging efficiency for a second period, wherein the first charging efficiency is different from the second charging efficiency;
determining whether a predetermined condition is met within the first period, wherein the method of determining whether the predetermined condition is met within the first period comprises the steps of:
obtaining a quantity of at least one battery demand received by the electronic equipment within a unit time to calculate a battery demand rate;
determining whether the battery demand rate is greater than a predetermined demand rate; and
when the battery demand rate is greater than the predetermined demand rate, determining that the predetermined condition is met within the first period; and
when the predetermined condition is met within the first period, adjusting the first charging efficiency, and charging the batteries with the adjusted first charging efficiency, wherein the adjusted first charging efficiency is equal to the second charging efficiency.

2. The method of claim 1, wherein the method of determining whether the predetermined condition is met within the first period comprises the steps of:
obtaining a power level of each battery in the electronic equipment;
for individual batteries, determining whether the battery is in a fully charged state according to its power level;
determining whether a number of the fully charged batteries in the electronic equipment, or a full charge ratio of the number of fully charged batteries in the electronic equipment to the total number of batteries that can be contained in the electronic equipment is lower than a predetermined value; and
when the number of the fully charged batteries in the electronic equipment, or the full charge ratio of the number of fully charged batteries in the electronic equipment to the total number of batteries that can be contained in the electronic equipment is lower than the predetermined value, determining that the predefined condition is met within the first period.

3. The method of any one of claims 1-2, further comprising:
re-determining whether the predetermined condition is met within the first period; and
when the predetermined condition is not met, re-charging the batteries at the first charging efficiency.

4. The method of any one of claims 1-3, wherein the first period is an off-peak period, the second period is a peak period, and the second charging efficiency is higher than the first charging efficiency.

5. The method of any one of claims 1-4, further comprising:
connecting to a cloud server through a network; and
receiving information corresponding to the first period and the second period from the cloud server.

6. A battery energy station, comprising:
a battery storage system comprising a plurality of batteries;
an energy module; and
a processing unit coupling to the battery storage system and the energy module, charging the batteries at a first charging efficiency in a first period, wherein the first charging efficiency during the first period is fixed, charging the batteries at a second charging efficiency for a second period, wherein the first charging efficiency is different from the second charging efficiency, determining whether a predetermined condition is met within the first period, wherein the method of determining whether the predetermined condition is met within the first period comprises the steps of: obtaining a quantity of at least one battery demand received by the electronic equipment within a unit time to calculate a battery demand rate, determining whether the battery demand rate is greater than a predetermined demand rate, and when the battery demand rate is greater than the predetermined demand rate, determining that the predetermined condition is met within the first period, and when the predetermined condition is met within the first period, adjusting the first charging efficiency, and charging the batteries with the adjusted first charging efficiency, wherein the adjusted first charging efficiency is equal to the second charging efficiency.

7. The battery energy station of claim 6, wherein the first period is an off-peak period, the second period is a peak period, and the second charging efficiency is higher than the first charging efficiency.
